# EUROPEAN PATENT APPLICATION

(11) **EP 3 255 423 A1**
(43) Date of publication of application: **13.12.2017**
(21) Application number: 16173617.8
(22) Date of filing: 08.06.2016
(51) Int. Cl.: G01N 27/414

(54) **MULTI-SENSOR FOR RATE AND CONCENTRATION**

(71) Applicant: Honeywell International Inc., Morris Plains, NJ 07950 (US)
(72) Inventor: DUMITRU, Viorel G., Morris Plains, NJ New Jersey 07950 (US); BREZEANU, Mihai, Morris Plains, NJ New Jersey 07950 (US); BUIU, Octavian, Morris Plains, NJ New Jersey 07950 (US); STRATULAT, Alisa, Morris Plains, NJ New Jersey 07950 (US); IONESCU, Octavian-Narcis, Morris Plains, NJ New Jersey 07950 (US); COBIANU, Cornel, Morris Plains, NJ New Jersey 07950 (US); SERBAN, Bogdan, Morris Plains, NJ New Jersey 07950 (US)
(74) Representative: Houghton, Mark Phillip

(57) **Abstract**

Multi-sensor device for rate and concentration includes a sensor comprising: a first GaN device coupled to a substrate to measure a concentration of a gas, and at least two second GaN devices coupled to the substrate to measure a flow rate of the gas.

## Description

### Technical Field

The present disclosure relates to methods, devices, system, and computer-readable media for a multi-sensor for rate and concentration.

### Background

Systems and methods for flow metering can be performed utilizing a circular chart recorder. In addition, flow metering can be performed by electrically powered remote terminal units. Flow metering can be utilized to measure a quantity of gas supplied to a particular building or area. In some examples, flow metering is utilized to measure a quantity of a fuel gas (e.g., natural gas, etc.) delivered to a building by a utility company. In some examples, the quantity of fuel gas can be utilized to calculate an energy consumption of a building or area.

### Brief Description of the Drawings

Figure 1 is an example of a system for a multi-sensor for rate and concentration consistent with one or more embodiments of the present disclosure.
Figure 2 is an example of a system for a multi-sensor for rate and concentration consistent with one or more embodiments of the present disclosure.
Figure 3 is an example of a system for a multi-sensor for rate and concentration consistent with one or more embodiments of the present disclosure.
Figure 4 is an example of a diagram of a device for a multi-sensor for rate and concentration consistent with one or more embodiments of the present disclosure.

### Detailed Description

Devices, methods, systems, and computer-readable media for a multi-sensor for rate and concentration are described herein. One example includes a sensor comprising: a first GaN device coupled to a substrate to measure a concentration of a gas, and at least two second GaN devices coupled to the substrate to measure a flow rate of the gas. In some examples, a sensor can include a first GaN device coupled to a substrate to measure a concentration of a gas, a second GaN device coupled to the substrate on a first side of the first GaN device, and a third GaN device coupled to the substrate to measure a flow rate of the gas with the second GaN device, wherein the third GaN device is on a second side of the first GaN device. In some examples, the GaN devices can be an aluminum gallium nitride (AlxGa1-xN, 0<x<1) layer grown over a GaN layer of the substrate.

In some examples, the systems and methods for a multi-sensor for rate and concentration can be utilized to simultaneously measure gas flow and hydrocarbon concentration. In some examples, the systems and methods can utilize a number of diodes and/or transistors formed on a single wafer or substrate to simultaneously measure gas flow and hydrocarbon concentration. In some examples, the number of GaN devices, diodes, and/or transistors can include gallium nitride (GaN) diodes and/or high-electron-mobility transistor (HEMT) transistors. In some examples, the number of diodes and/or transistors can be utilized as thermal sensors. As used herein, a thermal sensor includes a sensor that can alter a resistance based on the thermal transfer of a gas.

In some examples, the sensor can include a first hydrocarbon sensitive device to measure a concentration of hydrocarbons within a gas and two or more temperature sensitive devices to measure a flow rate of the gas. In some examples, one hydrocarbon sensitive GaN HEMT transistor can be utilized for measuring the hydrocarbon concentration and two or more GaN HEMT transistors can be utilized as temperature sensors for detecting the gas flow. Another example includes a sensor comprising: one hydrocarbon sensitive GaN HEMT transistor utilized for measuring the hydrocarbon concentration and two or more GaN Schottky diodes that are used as temperature sensors for measuring gas flow. Another example can include a sensor comprising: a hydrocarbon sensitive GaN Schottky diode to measure the hydrocarbon concentration and two or more GaN Schottky diodes used as temperature sensors for measuring the gas flow. In some examples, the hydrocarbon sensitive device can be utilized as a first heater. In some examples, a second heater can be coupled to the substrate as described further herein.

The systems and methods for a multi-sensor for rate and concentration can be utilized to simultaneously measure gas flow and hydrocarbon concentration for relatively smaller consumers such as individual houses or smaller buildings. In some examples, a single multi-sensor can be relatively less costly and include a relatively smaller footprint compared to previous systems and methods.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit corresponds to the drawing figure number and the remaining digits identify an element or component in the drawing. Similar elements or components between different figures may be identified by the use of similar remaining digits.

As used herein, "a" or "a number of'' something can refer to one or more such things. For example, "a number of devices" can refer to one or more devices. Additionally, the designator "N", as used herein, particularly with respect to reference numerals in the drawings, indicates that a number of the particular feature so designated can be included with a number of embodiments of the present disclosure.

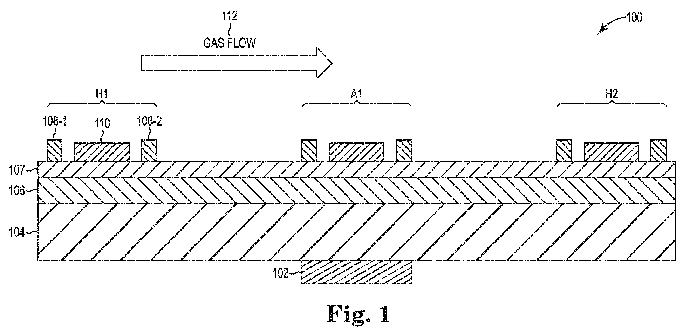

Figure 1 is an example of a system 100 for a multi-sensor for rate and concentration consistent with one or more embodiments of the present disclosure. In some examples, the system 100 can represent a single wafer and/or a single sensor that can be utilized to measure gas flow 112 and hydrocarbon concentration. As used herein, the gas flow 112 is a quantity of gas passing over the system 100 over a period of time. For example, the gas flow or gas flow rate can be a speed of the gas passing over the system 100. As used herein, the hydrocarbon concentration includes a concentration of a particular hydrocarbon or combination of hydrocarbons within the gas of the gas flow 112.

In some examples, the system 100 can include a heat source 102. In some examples, the heat source 102 can be an electrode heater. In some examples, the heat source 102 can be utilized to maintain a particular temperature for the system 100. For examples, the heat source 102 can maintain a temperature of the system 100, such that the thermal transfer of the gas flow 112 can be measured. In some examples, the heat source 102 can be coupled to a layer 104. In some examples, the layer 104 can include a substrate such as a wafer. In some examples, the layer 104 can include silicon, silicon carbide, or sapphire.

In some examples, the system 100 can utilize a sensor A1 as a transistor heater instead of utilizing a separate heat source 102. In some examples, the sensor A1 can be a transistor. In some examples the sensor A1 can be a gallium nitride (GaN) HEMT transistor. In some examples, the GaN HEMT transistor can dissipate heat when utilized to measure a concentration of hydrocarbons as described herein. In some examples, the GaN HEMT transistor can be utilized as a heat source that is separate from the heat source 102.

In some examples, a layer 106 can be grown on the layer 104. In some examples, the layer 106 can include a nitride material. For example, the layer 106 can be a gallium nitride (GaN) material. In some examples, a layer 107 can be grown on the layer 106. In some examples, the layer 107 can include a nitride material. For example, the layer 107 can be an aluminum gallium nitride (AlGaN) material.

In some examples, the system 100 can include a number of sensors to simultaneously measure gas flow 112 and hydrocarbon concentration. For example, sensor H1 and sensor H2 can be utilized to measure the rate of the gas flow 112. For example, when exposed to a gas flow 112, the sensor H1 and sensor H2 would have different temperatures and hence different electrical resistance. By measuring and comparing the electrical resistance of sensors H1 and H2, the rate of the gas flow can be determined. In this example, the system 100 can utilize the electrical resistance to measure the rate of the gas flow 112. In some examples, more than two sensors could be used for measuring the rate of the gas flow.

In some examples, the system can include a sensor A1 to measure hydrocarbon concentration. As described herein, the hydrocarbon concentration can be measured by sensor A1 simultaneously with sensor H1 and sensor H2 measuring the rate of the gas flow 112. In some examples, the sensor A1 can be positioned between sensor H1 and sensor H2. In some examples, the sensor A1 can utilize a hydrocarbon sensitive GaN transistor. As used herein, a hydrocarbon sensitive GaN transistor can include a GaN transistor where an electrical resistance can be affected by a quantity of a hydrocarbon. For example, a quantity of a hydrocarbon can include a corresponding modulation of the GaN HEMT electrical resistance. In this example, the electrical resistance can be utilized to measure the quantity or concentration of a hydrocarbon. For example, a hydrocarbon sensitive GaN transistor can include a gate electrode made from metal. In this example, the metal can include platinum or palladium.

In some examples, the number of sensors (e.g., sensor H1, sensor H2, sensor A1, etc.) can be GaN high-electron-mobility transistor (HEMT) transistors. In some examples, the GaN HEMT transistors can include a schottky contact 110 that is positioned between a first ohmic contact 108-1 and a second ohmic contact 108-2. In some examples, the first ohmic contact 108-1 can be utilized as a source or drain, the second ohmic contact 108-2 can be utilized as a source or drain, and the schotky contact 110 can be utilized as the gate for the GaN HEMT transistors.

In some examples, the system 100 can be utilized to simultaneously measure a speed of the gas flow 112 and a hydrocarbon concentration of the gas flow 112. That is, the system 100 can be utilized as a multi-sensor. In some examples, the system 100 can be coupled to a computing device for processing the speed and hydrocarbon concentration based on the electrical resistance as described herein.

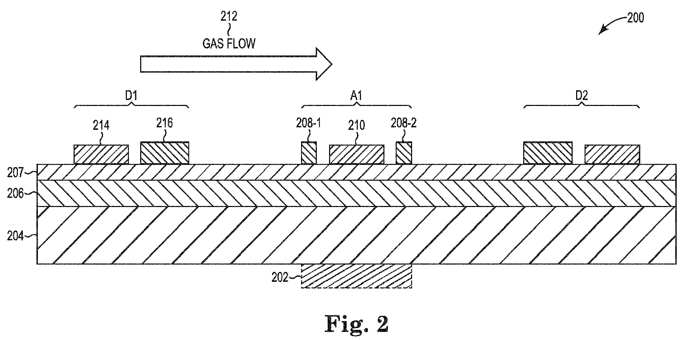

Figure 2 is an example of a system 200 for a multi-sensor for rate and concentration consistent with one or more embodiments of the present disclosure. In some examples, the system 200 can represent a single substrate and/or a single sensor that can be utilized to measure the rate of the gas flow 212 and hydrocarbon concentration. In some examples, the system 200 can include a substrate with the same or similar features as the system 100 as referenced in Figure 1. For example, the system 200 can include a heat source 202, a first layer 204, a second layer 206, and/or a barrier 207.

In some examples, the heat source 202 can be an electrode heater for maintaining a temperature of the system 200 such that a thermal transfer of the gas flow can be measure. In some examples, the first layer 204 can include silicon, silicon carbide, or sapphire. In some examples, the second layer 206 can include a nitride material. For example, the layer 206 can be a gallium nitride (GaN) material. In some examples, the barrier 207 can include a layer of a nitride material. For example, the barrier 207 can be an aluminum gallium nitride (AlGaN) material.

In some examples, the system 200 can utilize a sensor A1 as a transistor heater instead of utilizing a separate heat source 202. In some examples, the sensor A1 can be a transistor. In some examples the sensor A1 can be a gallium nitride (GaN) HEMT transistor. In some examples, the GaN HEMT transistor can dissipate heat when utilized to measure a concentration of hydrocarbons as described herein. In some examples, the GaN HEMT transistor can be utilized as a heat source that is separate from the heat source 202.

In some examples, the system 200 can include a number of sensors (e.g., sensor D1, sensor A1, sensor D2, etc.). In some examples, the sensor A1 can be a GaN high-electron-mobility transistor (HEMT) transistor. In some examples, the GaN HEMT transistor can include a schottky contact 210 that is positioned between a first ohmic contact 208-1 and a second ohmic contact 208-2. In some examples, the first ohmic contact 208-1 can be utilized as a source or drain, the second ohmic contact 208-2 can be utilized as a source or drain, and the schotky contact 210 can be utilized as the gate for the GaN HEMT transistor. As described herein, the GaN HEMT transistor can measure a hydrocarbon concentration of the gas flow 212 by measuring an electrical resistance altered by hydrocarbon molecules in the the gas flow 212.

In some examples, the sensor D1 and the sensor D2 can be diodes on the barrier 207. In some examples, the sensor D1 and the sensor D2 can be schottky diodes. In some examples, the sensor D1 can include a schottky contact 214 and an ohmic contact 216. In some examples, the sensor D1 and the sensor D2 can measure the rate of the gas flow 212. For example, the sensor D1 and the sensor D2 can measure a rate or speed of gas molecules passing over the sensor D1 and the sensor D2. In some examples, the sensor D1 and the sensor D2 can utilize thermal transfer of the gas flow 212 on the sensor D1 and the sensor D2. As described herein, the thermal transfer of the gas flow 212 can be utilized to determine the rate or speed of the gas flow 212.

In some examples, the system 200 can be utilized to simultaneously measure a speed of the gas flow 212 and a hydrocarbon concentration of the gas flow 212. That is, the system 200 can be utilized as a multi-sensor. In some examples, the system 200 can be coupled to a computing device for processing the speed and hydrocarbon concentration based on the electrical resistance as described herein.

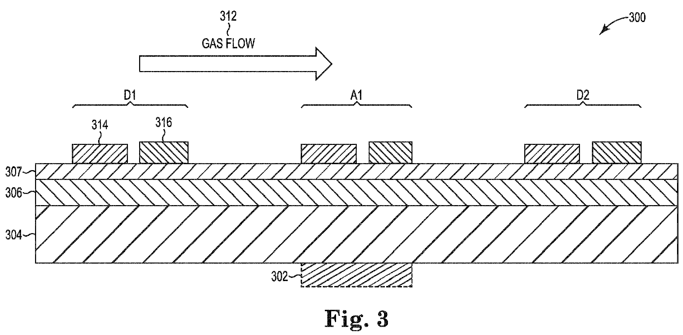

Figure 3 is an example of a system 300 for a multi-sensor for rate and concentration consistent with one or more embodiments of the present disclosure. In some examples, the system 300 can represent a single substrate and/or a single sensor that can be utilized to measure a rate of the gas flow 312 and hydrocarbon concentration. In some examples, the system 300 can include a substrate with the same or similar features. For example, the system 300 can include a heat source 302, a first layer 304, a second layer 306, and/or a barrier 307.

In some examples, the heat source 302 can be a transistor heater, an electrode heater, and/or a metal electrode heater that can be utilized to maintain a temperature for the system 300. In some examples, the first layer 304 can include silicon, silicon carbide, or sapphire. In some examples, the second layer 306 can include a nitride material. For example, the layer 306 can be a gallium nitride (GaN) material. In some examples, the barrier 307 can include a layer of a nitride material. For example, the barrier 307 can be an aluminum gallium nitride (AlGaN) material.

In some examples, the system 300 can include a number of sensors (e.g., sensor D1, sensor A1, sensor D2, etc.). In some examples, the sensor D1, the sensor A1, and the sensor D2 can be diodes on the barrier 307. In some examples, the sensor D1, the sensor A1, and the sensor D2 can be Schottky diodes. In some examples, the sensor D1 can include a schottky contact 314 and an ohmic contact 316. In some examples, the sensor D1 and the sensor D2 can measure the rate of the gas flow 312. For example, the sensor D1 and the sensor D2 can measure a rate or speed of gas molecules passing over the sensor D1 and the sensor D2. In some examples, the sensor D1 and the sensor D2 can utilize thermal transfer of the gas flow 312 on the sensor D1 and the sensor D2. As described herein, the thermal transfer of the gas flow 312 can be utilized to determine the rate or speed of the gas flow 312.

In some examples, the sensor A1 can measure a hydrocarbon concentration of the gas flow 312. For example, the sensor A1 can measure a concentration by utilizing a hydrocarbon sensitive schottky diode. As used herein, a hydrocarbon sensitive schottky diode can include a schottky diode where the schottky barrier height can be affected by a quantity of a hydrocarbon in the gas flow 312. For example, a quantity of a hydrocarbon can induce a variation of the electrical current flowing through the schottky diode. In this example, the electrical current flowing through the schottky diode can be utilized to measure the quantity or concentration of hydrocarbon molecules within the gas flow 312.

In some examples, the system 300 can be utilized to simultaneously measure a speed of the gas flow 312 and a hydrocarbon concentration of the gas flow 312. That is, the system 300 can be utilized as a multi-sensor. In some examples, the system 300 can be coupled to a computing device for processing the speed and hydrocarbon concentration based on the electrical resistance as described herein.

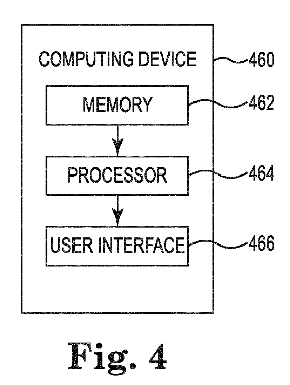

Figure 4 is an example of a diagram of a computing device 460 for a multi-sensor for rate and concentration consistent with one or more embodiments of the present disclosure. Computing device 460 can be, for example, an embedded system as described herein, among other types of computing devices. In some examples, the computing device 460 can be a controller (e.g., embedded controller, etc.).

As shown in Figure 4, computing device 460 includes a memory 462 and a processor 464 coupled to user interface 466. Memory 462 can be any type of storage medium that can be accessed by processor 464, which performs various examples of the present disclosure. For example, memory 462 can be a non-transitory computer readable medium having computer readable instructions (e.g., computer program instructions) stored thereon.

Further, although memory 462, processor 464 and user interface 466 are illustrated as being located in computing device 460, embodiments of the present disclosure are not so limited. For example, memory 462 can also be located internal to another computing resource (e.g., enabling computer readable instructions to be downloaded over the Internet or another wired or wireless connection). Part of the memory can be storage in a cloud storage. Processor 464 can be a cloud computer.

As shown in Figure 4, computing device 460 can also include a user interface 466. User interface 466 can include, for example, a display (e.g., a screen, an LED light, etc.). The display can be, for instance, a touch-screen (e.g., the display can include touch-screen capabilities). User interface 466 (e.g., the display of user interface 466) can provide (e.g., display and/or present) information to a user of computing device 460.

Additionally, computing device 460 can receive information from the user of computing device 460 through an interaction with the user via user interface 466. For example, computing device 460 (e.g., the display of user interface 466) can receive input from the user via user interface 466. The user can enter the input into computing device 460 using, for instance, a mouse and/or keyboard associated with computing device 460, or by touching the display of user interface 466 in embodiments in which the display includes touch-screen capabilities (e.g., embodiments in which the display is a touch screen).

As used herein, "logic" is an alternative or additional processing resource to execute the actions and/or functions, etc., described herein, which includes hardware (e.g., various forms of transistor logic, application specific integrated circuits (ASICs), etc.), field programmable gate arrays (FPGAs), as opposed to computer executable instructions (e.g., software, firmware, etc.) stored in memory and executable by a processor.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A sensor, comprising:
a first GaN device coupled to a substrate to measure a concentration of a gas; and
at least two second GaN devices coupled to the substrate to measure a flow rate of the gas.

2. The sensor of claim 1, wherein the first GaN device is a transistor.

3. The sensor of claim 2, wherein the first GaN device is a high-electron-mobility transistor (HEMT).

4. The sensor of claim 1, wherein the at least two second GaN devices are transistors.

5. The sensor of claim 4, wherein the at least two second GaN devices are high-electron-mobility transistors (HEMT).

6. The sensor of claim 1, wherein the at least two second GaN devices are diodes.

7. The sensor of claim 6, wherein the at least two second GaN devices are Schottky diodes.

8. The sensor of claim 1, wherein the first GaN device is utilized as a heat source.

9. The sensor of claim 1, comprising a meatal electrode heat source coupled to the substrate.

10. The sensor of claim 1, wherein the first GaN device and the at least two GaN devices are aluminum gallium nitride (AlxGa1-xN, 0<x<1) layer grown over a GaN layer on the substrate.

11. The sensor of claim 1, wherein the substrate comprises one of:
silicon;
sapphire; and
silicon carbide.

12. The sensor of claim 1, wherein the first GaN device includes a hydrocarbon sensitive GaN device.

13. The sensor of claim 1, wherein the at least two second GaN devices are connected by a bridge.

14. The sensor of claim 1, wherein the first GaN device is positioned between the at least two second GaN devices.

15. The sensor of claim 1, wherein the first GaN device is a high-electron-mobility transistor (HEMT) and the at least two second GaN devices are Schottky diodes.

## Amended claims

### Amended claims in accordance with Rule 137(2) EPC.

1. A sensor, comprising:
a first GaN device coupled to a substrate to measure a concentration of a gas, wherein an electrical resistance of the first GaN device is altered by different hydrocarbon concentrations of the gas and the concentration of hydrocarbons is measured based on the electrical resistance of the first GaN device; and
at least two second GaN devices coupled to the substrate to measure a flow rate of the gas, wherein an electrical resistance of the at least two second GaN devices are each altered by a temperature that corresponds to the flow rate of the gas and the flow rate of the gas is measured based on a comparison of the electrical resistance of the at least two second GaN devices.

2. The sensor of claim 1, wherein the first GaN device is a transistor.

3. The sensor of claim 2, wherein the first GaN device is a high-electron-mobility transistor (HEMT).

4. The sensor of claim 1, wherein the at least two second GaN devices are transistors.

5. The sensor of claim 4, wherein the at least two second GaN devices are high-electron-mobility transistors (HEMT).

6. The sensor of claim 1, wherein the at least two second GaN devices are diodes.

7. The sensor of claim 6, wherein the at least two second GaN devices are Schottky diodes.

8. The sensor of claim 1, wherein the first GaN device is utilized as a heat source.

9. The sensor of claim 1, comprising a meatal electrode heat source coupled to the substrate.

10. The sensor of claim 1, wherein the first GaN device and the at least two GaN devices are aluminum gallium nitride (AlxGa1-xN, 0<x<1) layer grown over a GaN layer on the substrate.

11. The sensor of claim 1, wherein the substrate comprises one of:
silicon;
sapphire; and
silicon carbide.

12. The sensor of claim 1, wherein the first GaN device includes a hydrocarbon sensitive GaN device.

13. The sensor of claim 1, wherein the at least two second GaN devices are connected by a bridge.

14. The sensor of claim 1, wherein the first GaN device is positioned between the at least two second GaN devices.

15. The sensor of claim 1, wherein the first GaN device is a high-electron-mobility transistor (HEMT) and the at least two second GaN devices are Schottky diodes.
